# EUROPEAN PATENT APPLICATION

(11) **EP 4 350 637 A1**
(43) Date of publication of application: **10.04.2024**
(21) Application number: 22815549.5
(22) Date of filing: 07.02.2022
(51) Int. Cl.: G06T 19/00, H04N 5/232

(54) **INFORMATION PROCESSING DEVICE, INFORMATION PROCESSING METHOD, AND PROGRAM**

(30) Priority: 31.05.2021 JP 2021091336
(71) Applicant: Sony Semiconductor Solutions Corporation, Atsugi-shi, Kanagawa 243-0014 (JP)
(72) Inventor: HIROSE Kazuto, Atsugi-shi, Kanagawa 243-0014 (JP); SEITA Tomoki, Atsugi-shi, Kanagawa 243-0014 (JP)
(74) Representative: Müller Hoffmann & Partner
(86) International application number: PCT/JP2022/004583
(87) International publication number: WO 2022/254790

(57) **Abstract**

The present technology relates to an information processing device, an information processing method, and a program that allow for improvement in accuracy of a perceptual model configured to simulate a sensor that perceives an object.

The information processing device includes a perceptual model configured to simulate a sensor that perceives an object by electromagnetic waves and generate output data representing a result of perceiving the object on the basis of input data including at least one of a propagation direction of the electromagnetic waves and spectral information about the electromagnetic waves. For example, the present technology is applicable to an automated driving simulator configured to simulate an automated driving system.

## Description

### [Technical Field]

The present technology relates to an information processing device, an information processing method, and a program, and more particularly, to an information processing device, an information processing method, and a program suitable for use when performing simulations of a sensor that senses an object.

### [Background Art]

In order to evaluate and verify for example the safety of an automated driving system that realizes automated driving, driving tests conducted virtually on a system that simulates an automated driving system (hereinafter referred to as "virtual driving tests") have been conducted in addition to driving tests conducted by driving a vehicle in reality (hereinafter referred to as "real driving tests")(see, for example, PTL 1).

### [Citation List]

### [Patent Literature]

[PTL 1]
JP 2020-109386 A

### [Summary]

### [Technical Problem]

Here, the automated driving system executes processing that may include a perception step, a recognition step, a determination step, and an operation step. The perception step refers to for example the step of perceiving the surroundings of a vehicle. The recognition step refers to for example the step of specifically recognizing the surroundings of the vehicle. The determination step refers to for example the step of executing various kinds of determination on the basis of the result of recognizing the surroundings of the vehicle. The operation step refers to for example the step of executing automated operation of the vehicle on the basis of various kinds of determination. Note that the perception step and the recognition step may be combined into a single cognitive step in some cases.

In contrast, for example images captured from the real world or images created by CG (Computer Graphics) (hereinafter referred to as "CG images") are used in conventional virtual driving tests. For example, in CG images, the size and shape of an object can be reproduced, but it is difficult to reproduce blur, defocused areas, light conditions, and the like. Therefore, tests in the operation step can be performed in the virtual driving tests, but the perception, recognition, and determination steps cannot be performed until necessary sensors are actually incorporated in the vehicle and real driving tests are performed.

Therefore, there has been a demand for a practical perceptual model that can produce images in which light conditions, blur, defocused areas, and the like are reproduced.

With the foregoing in view, the present technology has been developed and is directed to improvement of the accuracy of the perceptual model that simulates a sensor that perceives an object.

### [Solution to Problem]

An information processing device according to one aspect of the present technology includes a perceptual model configured to simulate a sensor that perceives an object by electromagnetic waves and generate output data that represents a result of perceiving the object on the basis of input data including at least one of a propagation direction of the electromagnetic waves and spectral information about the electromagnetic waves.

An information processing method according to another aspect of the present technology includes simulating a sensor configured to perceive an object by electromagnetic waves and generating output data representing a result of perceiving the object on the basis of input data including at least one of a propagation direction of electromagnetic waves and spectral information about the electromagnetic waves.

A program according to another aspect of the present technology causes a computer to perform processing including simulating a sensor that perceives an object by electromagnetic waves and generating output data representing a result of perceiving the object on the basis of input data including at least one of a propagation direction of the electromagnetic waves and spectral information about the electromagnetic waves.

According to another aspect of the present technology, a sensor that perceives an object by electromagnetic waves is simulated, and output data representing a result of perceiving the object is generated on the basis of input data including at least one of a propagation direction of the electromagnetic waves and spectral information about the electromagnetic waves.

### [Brief Description of Drawings]

[Fig. 1]

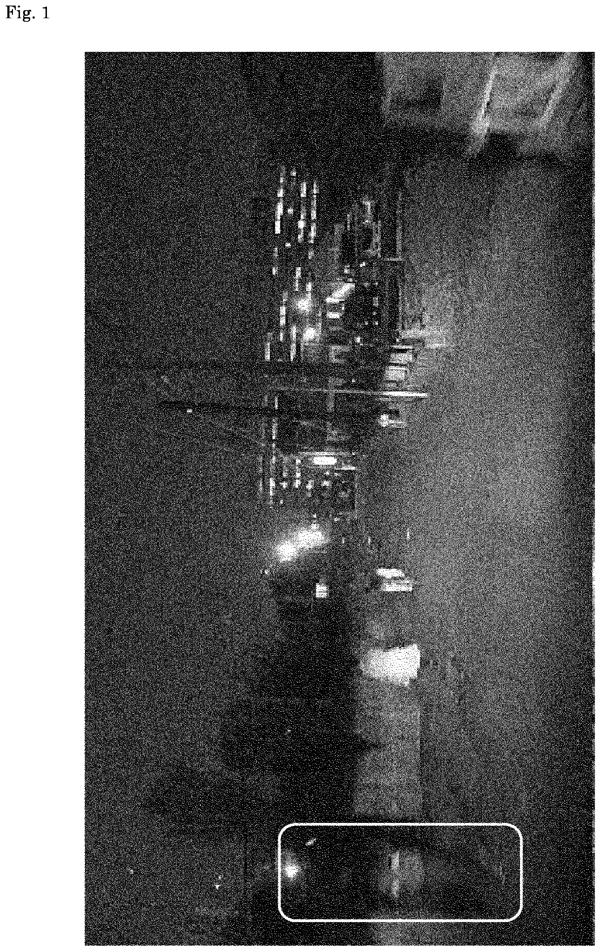

   Fig. 1 illustrates an example of motion blur.
[Fig. 2]

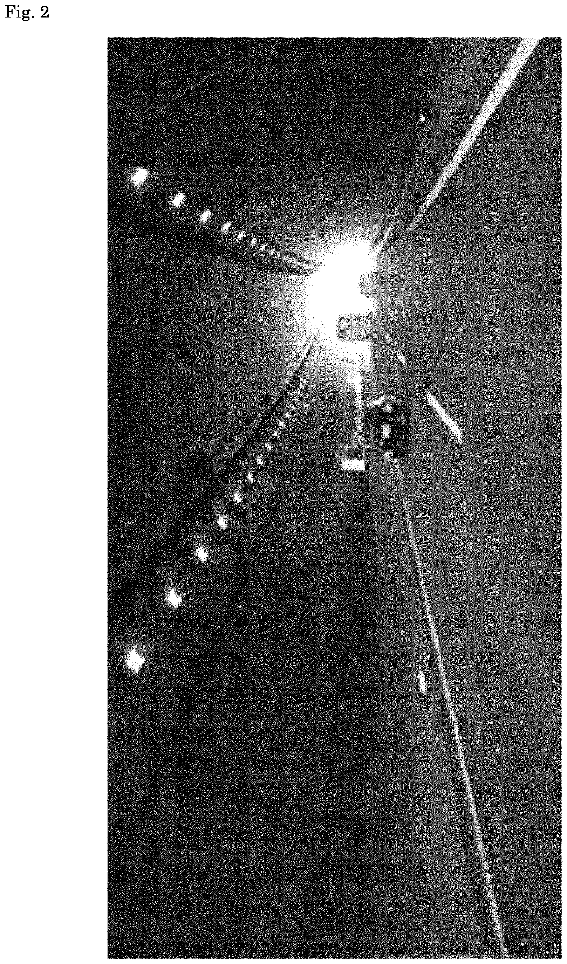

   Fig. 2 illustrates an example of white clipping.
[Fig. 3]

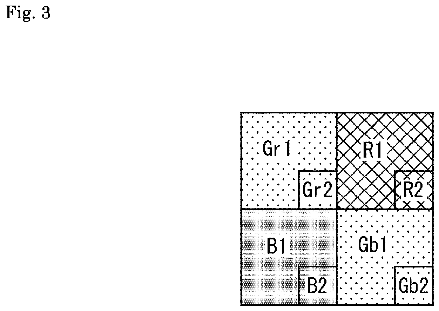

   Fig. 3 is a diagram of an example of a sub-pixel structure.
[Fig. 4]

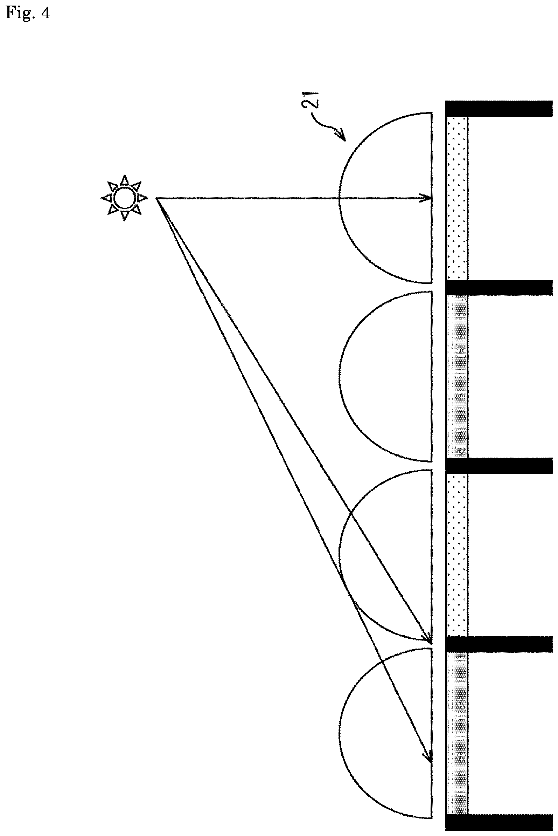

   Fig. 4 is a diagram for illustrating the principle of how flares and ghosts are generated.
[Fig. 5]

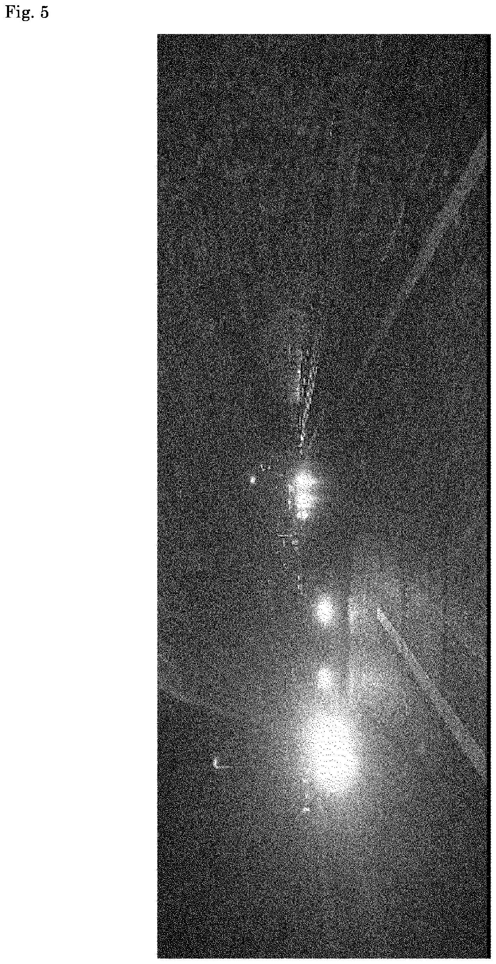

   Fig. 5 illustrates examples of flares and ghosts.
[Fig. 6]

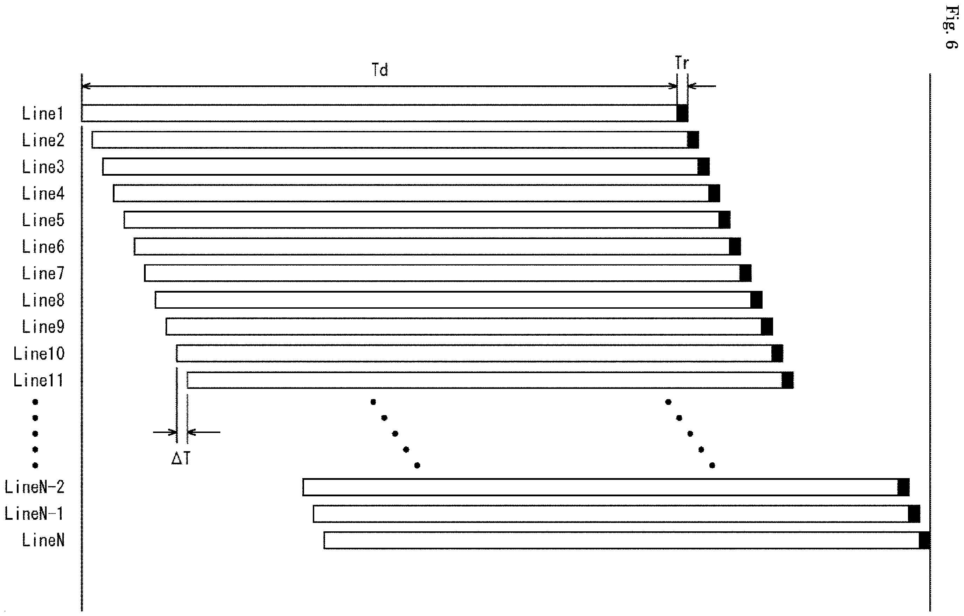

   Fig. 6 is a timing chart for illustrating a rolling shutter type imager.
[Fig. 7]

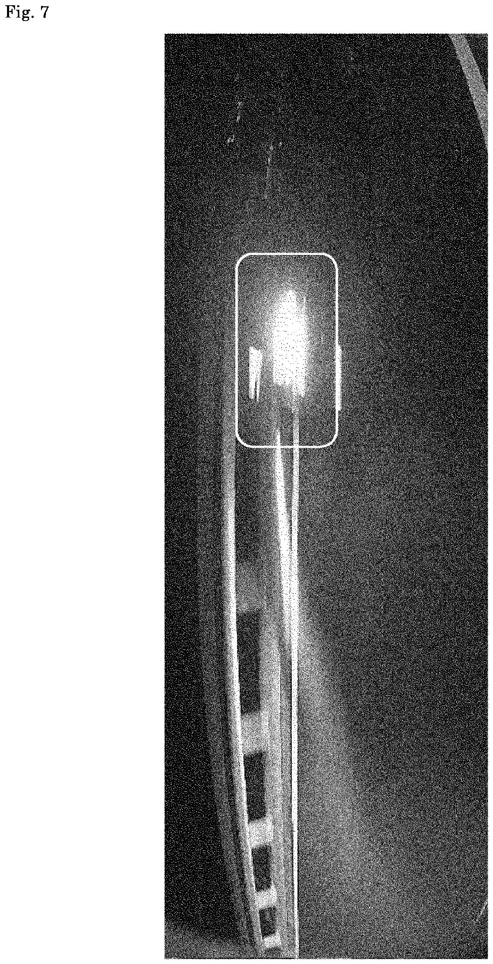

   Fig. 7 illustrates an example of rolling shutter distortion.
[Fig. 8]

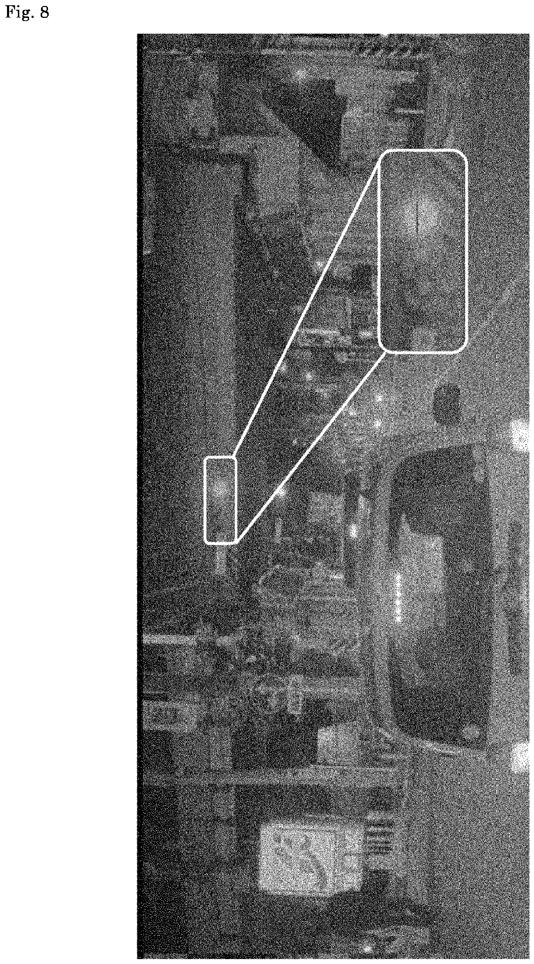

   Fig. 8 illustrates an example of a flicker.
[Fig. 9]

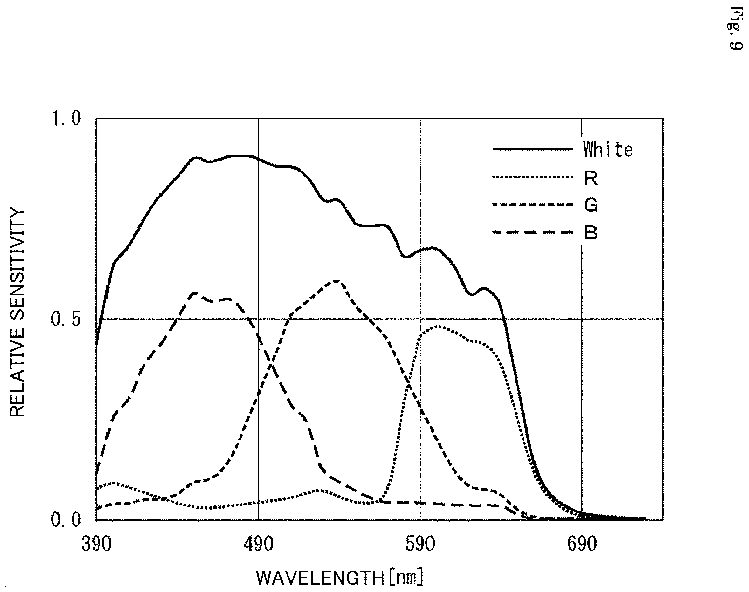

   Fig. 9 is a graph illustrating an example of the spectral sensitivity characteristic of each pixel in the imager.
[Fig. 10]

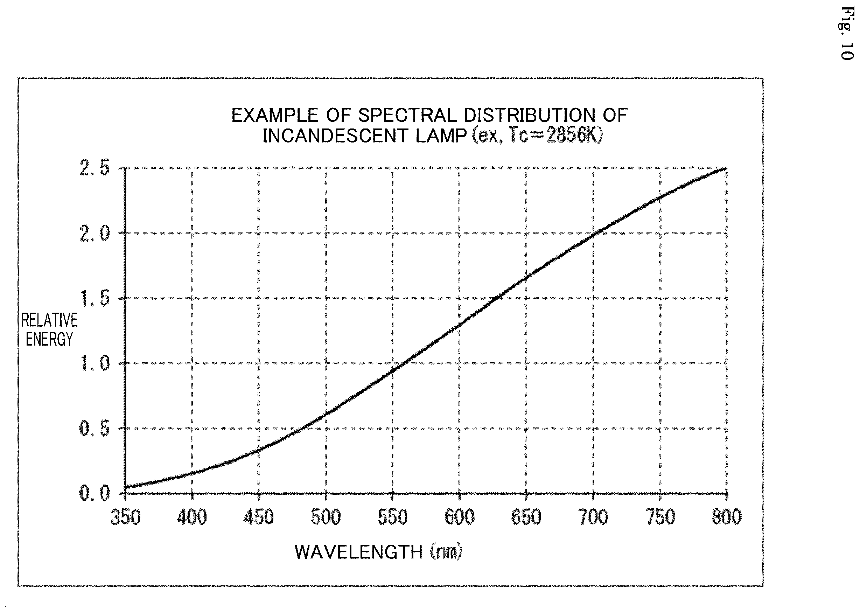

   Fig. 10 is a graph illustrating an example of the spectral distribution of an incandescent lamp.
[Fig. 11]

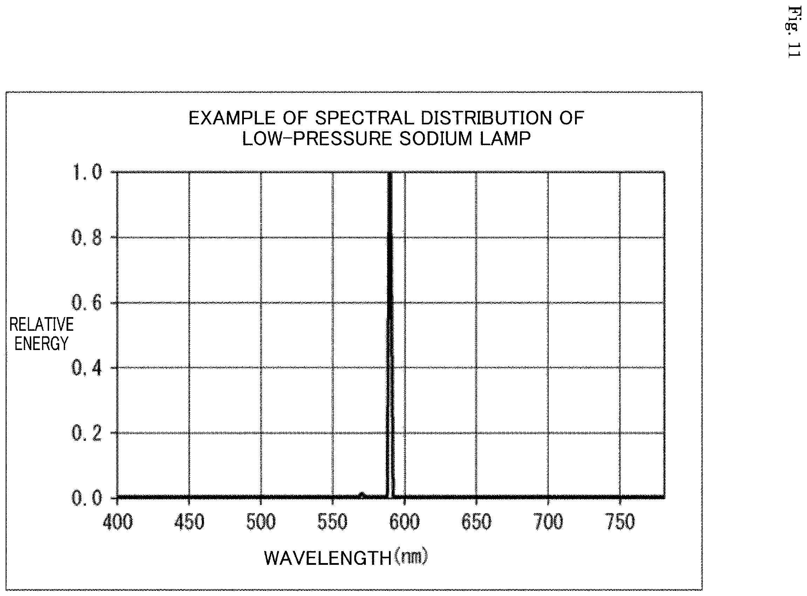

   Fig. 11 is a graph illustrating an example of the spectral distribution of a low-pressure sodium lamp.
[Fig. 12]

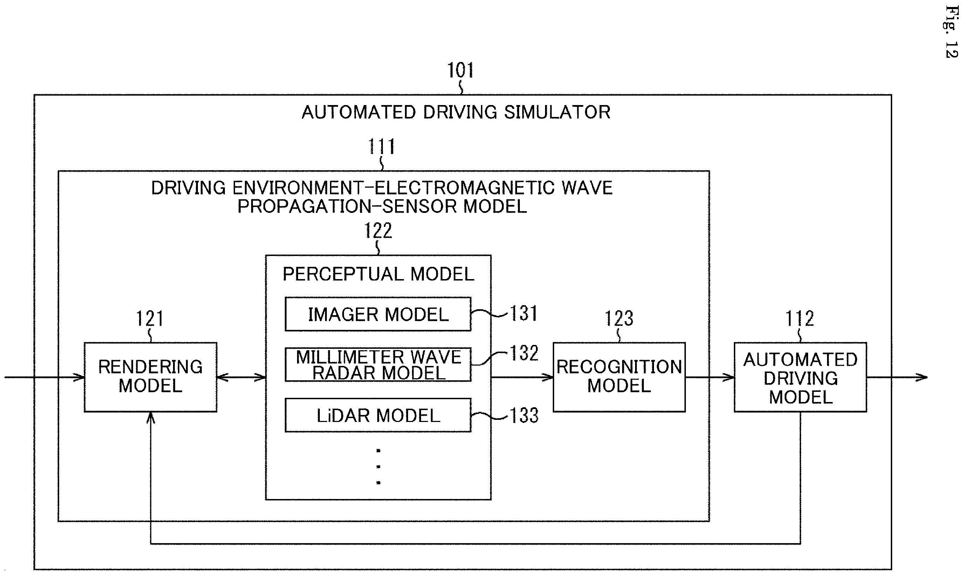

   Fig. 12 is a block diagram of an automated driving simulator according to a first embodiment.
[Fig. 13]

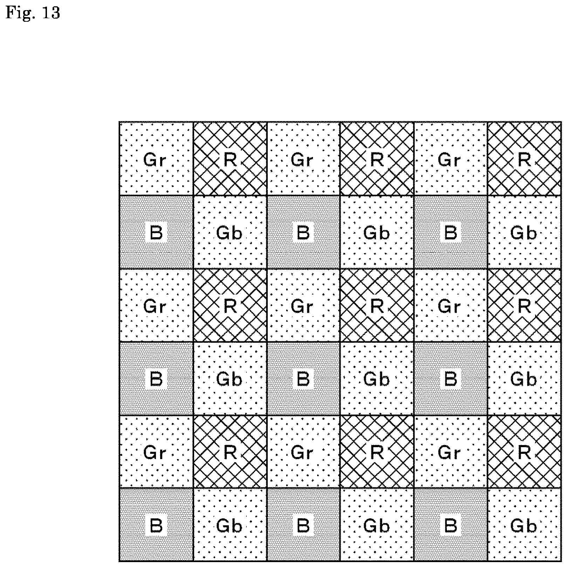

   Fig. 13 is a diagram of an exemplary arrangement of pixels in an imager model.
[Fig. 14]

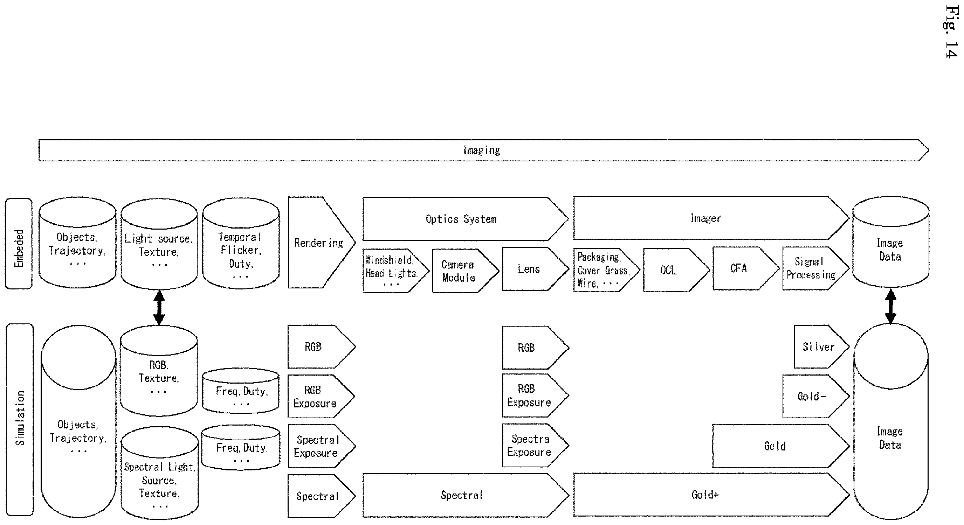

   Fig. 14 is a table indicating the correspondence between the real space, an automated driving system, and various models in an imaging model.
[Fig. 15]

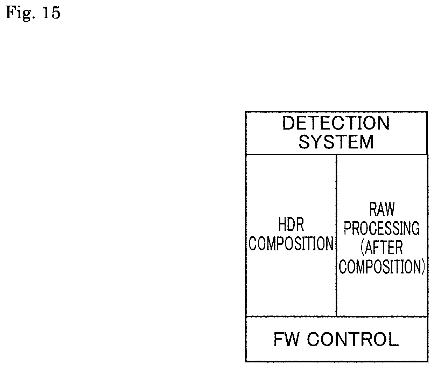

   Fig. 15 is a diagram for illustrating an example of signal processing by an imager to be simulated in a silver model.
[Fig. 16]

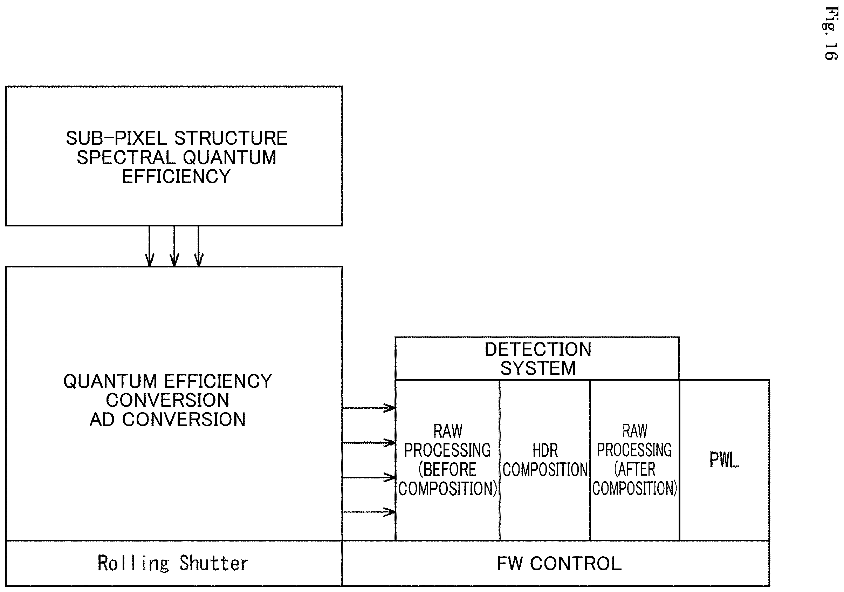

   Fig. 16 is a diagram for illustrating signal processing by an imager to be simulated in a gold model.
[Fig. 17]

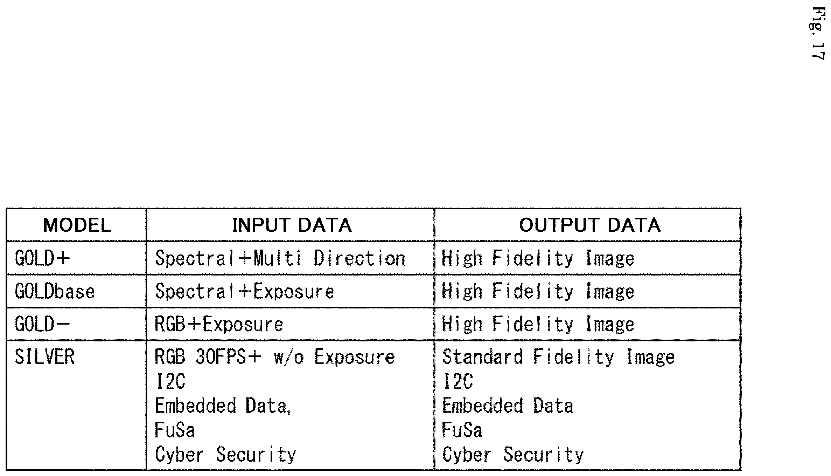

   Fig. 17 illustrates examples of input/output data to/from an imager model.
[Fig. 18]

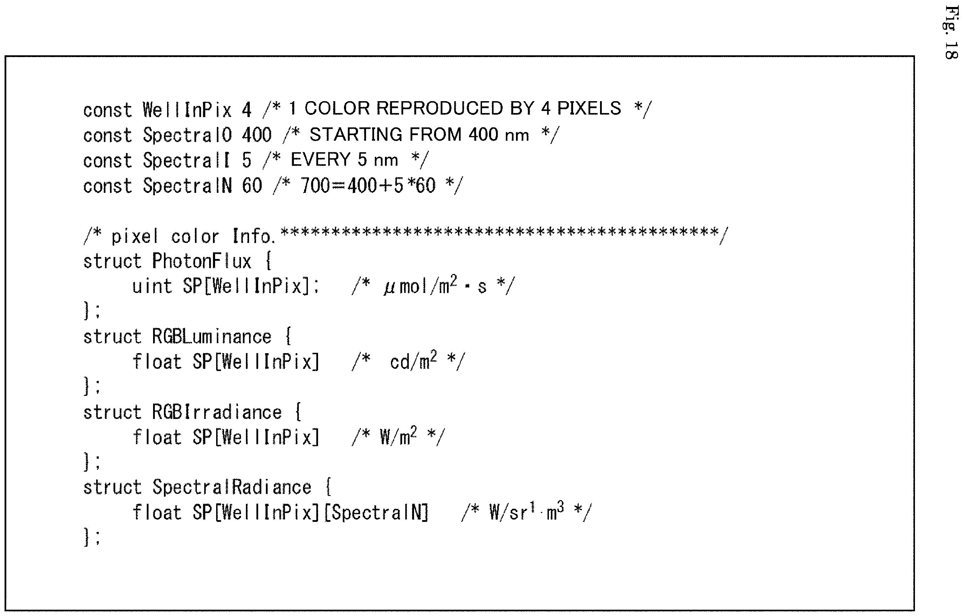

   Fig. 18 illustrates an example of the structure of data related to the intensity of incident light.
[Fig. 19]

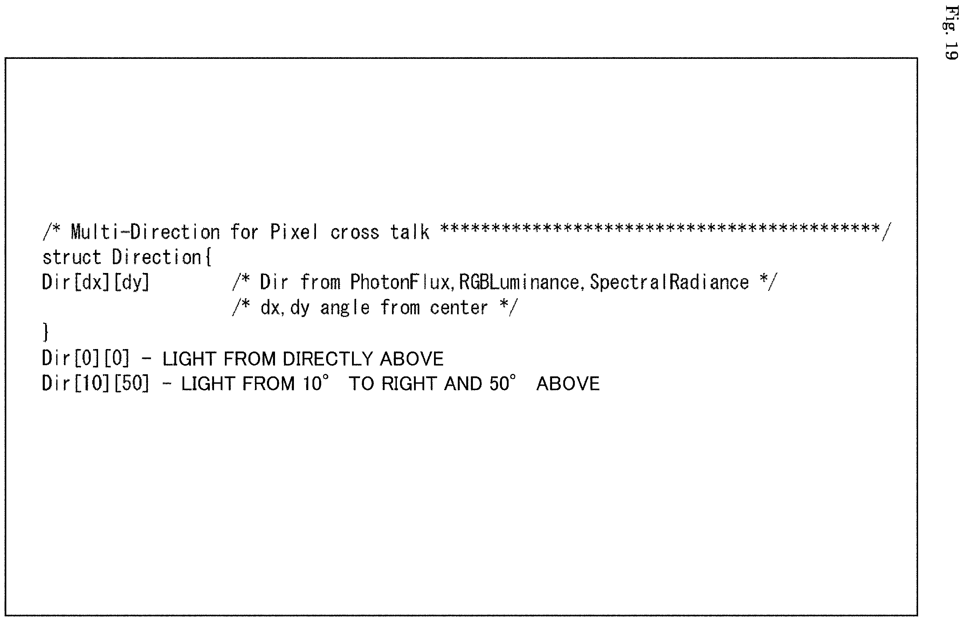

   Fig. 19 illustrates an example of the structure of data related to the direction of incidence of incident light.
[Fig. 20]

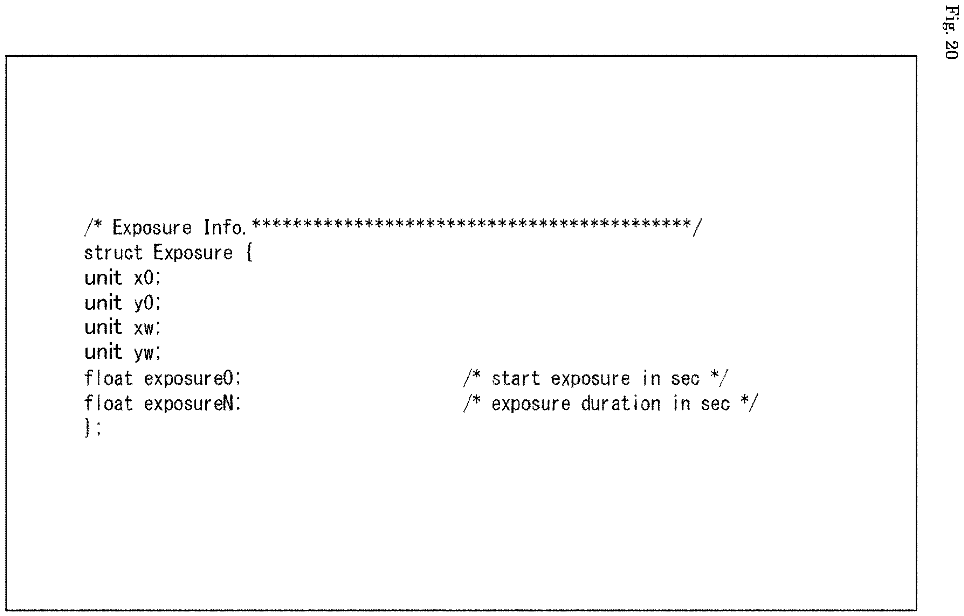

   Fig. 20 illustrates an example of the structure of data related to an exposure characteristic.
[Fig. 21]

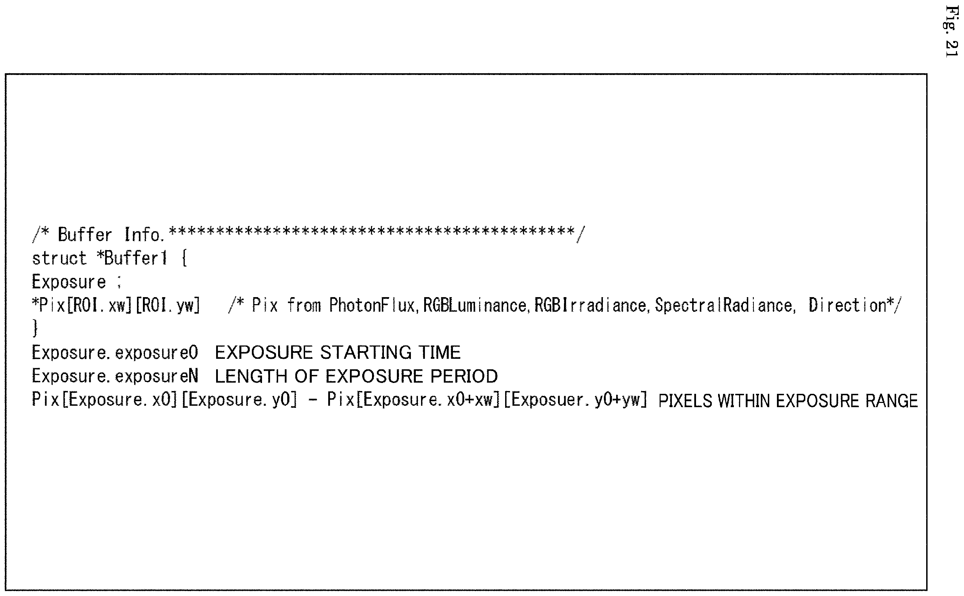

   Fig. 21 illustrates an example of the structure of a buffer between a rendering model and an imager model.
[Fig. 22]

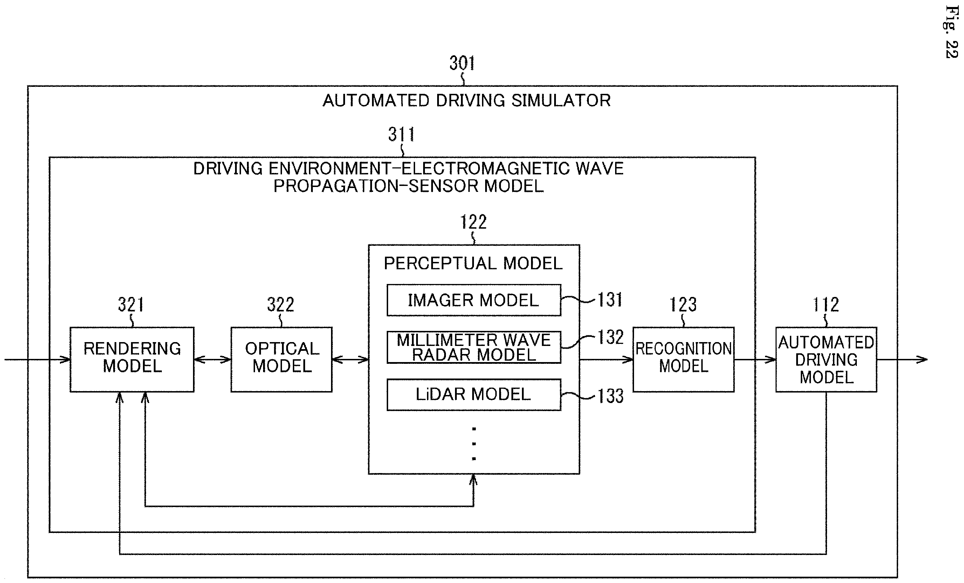

   Fig. 22 is a block diagram of an automated driving simulator according to a second embodiment.
[Fig. 23]

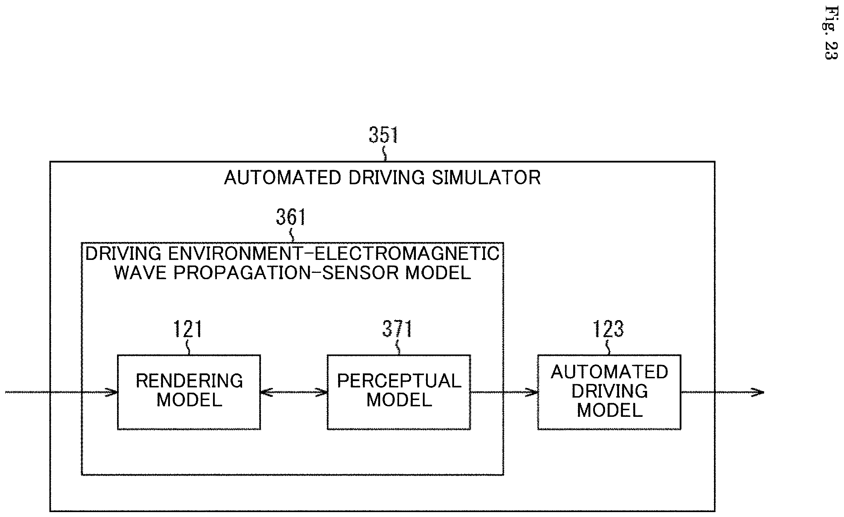

   Fig. 23 is a block diagram of an automated driving simulator according to a third embodiment.
[Fig. 24]

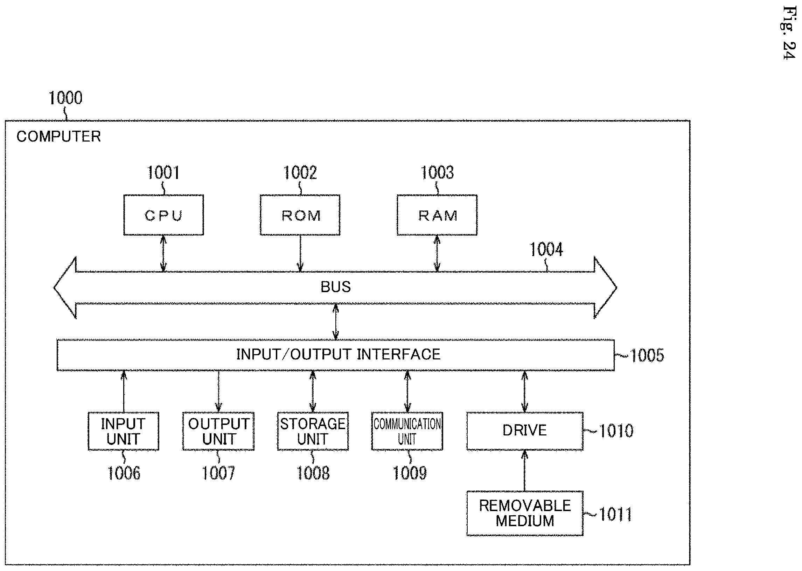

   Fig. 24 is a block diagram of an example of the configuration of a computer.

### [Description of Embodiments]

An embodiment for carrying out the present technology will be described. The description will be made in the following order.
1. Background of the present technology
2. Embodiment
3. Modifications
4. Others

### «1. Background of Present Technology»

Now, the background of the present technology will be described with reference to Figs. 1 to 11.

It is difficult for an imager model used in conventional virtual driving tests to reproduce the following phenomena which occur in captured images obtained by a real imager. Note that the imager model is a kind of a perceptual model and simulates an imager.

### <Motion Blur>

While moving at high speed, a vehicle is surrounded by other vehicles that also move at high speed. When the relative speed between the vehicle and an object around the vehicle is high, motion blur like the case of the vehicle in the frame at the left end in Fig. 1 may occur in a photograph taken from the vehicle.

It is difficult for the conventional imager model to reproduce the motion blur.

### <White and Black Clippings>

When for example shooting a very bright scene, such as a scene illuminated by direct sunlight, white clipping may occur or a part of the captured image may become completely white. When for example shooting a very dark scene such as a scene in a suburban area at night, black clipping may occur or a part of the captured image may become totally black. For example, when a scene with parts that differ greatly in brightness is captured, white and black clipping may occur in a part of the captured image like the part near the exit of the tunnel as shown in Fig. 2.

It is difficult for the conventional imager model to reproduce such white clipping and black clipping.

In order to prevent the white clipping and black clipping, HDR (High Dynamic Range) composition processing may be applied to expand the dynamic range of a captured image. A specific example of the HDR composition processing will be described.

For example, in HDR composition processing, the dynamic range of a captured image is expanded by combining an image taken with a long exposure time with an image taken with a short exposure time.

For example, as shown in Fig. 3, HDR composition processing is carried out using an imager with a sub-pixel structure. The imager with the sub-pixel structure has main pixels with low sensitivity and a large light-receiving surface, and sub-pixels with high sensitivity and a small light-receiving surface. A low sensitivity image captured using main pixels and a high sensitivity image captured using sub-pixels are combined to expand the dynamic range of the captured image.

Note that in this example, the main pixels include Gr1, R1, B1, and Gb1 pixels. The sub-pixels include Gr2, R2, B2, and Gb2 pixels. The Gr1, Gr2, Gb1, and Gb2 pixels are provided with green filters. The R1 and R2 pixels are provided with red filters. The B1 and B2 are provided with blue filters.

It is difficult for the conventional imager model to reproduce captured images produced by the HDR composition processing.

### <Flares, Ghosts>

For example, as shown in Fig. 4, when strong light enters the imager 21 in an oblique direction, a flare or ghost may occur in a captured image, as shown in Fig. 5.

It is difficult for the conventional imager to reproduce such a flare or ghost.

### <Rolling Shutter Distortion>

Fig. 6 is a timing chart for illustrating transitions between exposure periods and readout periods for pixel rows in a rolling shutter imager. The abscissa represents time and the ordinate represents pixel rows (lines). In each pixel line, the period indicated by a white frame represents the exposure period, and the period indicated by a black frame represents the readout period.

As in the illustrated example, using the rolling shutter imager, exposure is performed sequentially starting from the first pixel line at prescribed time intervals ΔT and continues for a prescribed period Td. During a prescribed readout period Tr after the end of the exposure period, charge accumulated at the pixels is read out.

Therefore, the exposure period is shifted between the pixel lines. Therefore, when for example the relative speed between the vehicle and an object around the vehicle is high, the shape of the subject or rolling shutter distortion may be distorted like the case of the headlight of the vehicle in the frame shown in Fig. 7.

It is difficult for the conventional imager model to reproduce the rolling shutter distortion.

Note that as for the rolling shutter type device, exposure is normally started sequentially on a pixel line basis, but exposure may be started for every n (two or more) pixel lines.

### <Flickers>

For example, when a light source with a fast blinking speed (such as an LED) is photographed or when a scene illuminated by light from a light source with a fast blinking speed is captured, flickers may sometimes occur in the captured image.

For example, when a traffic light including LEDs is photographed, the LEDs blink at different timings, which causes flickers, and variations in the brightness of the lamps of the traffic light sometimes result or a part of the lamp may end up missing as shown in the frame in Fig. 8. If for example the LEDs blink at the same timing and the traffic light including the LEDs is photographed using the rolling shutter type imager as described above, the high blinking speed of the LEDs may cause flickers.

For example, flickers may also occur when the rolling-shutter imager is used to capture a scene illuminated by light from a light source with a high blinking speed. In other words, pixel lines exposed under light illumination and pixel lines exposed under no light illumination are both present, and the brightness of the captured image may vary in some cases.

It is difficult for the conventional imager model to reproduce the flickers.

### <Light Source with Special Spectrum>

Fig. 9 illustrates an example of the spectral sensitivity characteristic of pixels in the imager. More specifically, the drawing illustrates the spectral sensitivity characteristics of an R pixel with a red filter, a G pixel with a green filter, a B pixel with a blue filter, and a W (white) pixel with no color filter. The abscissa represents wavelength, and the ordinate represents relative sensitivity.

Fig. 10 indicates an example of the spectral distribution (spectrum) of an incandescent lamp at a color temperature Tc of 2856 K. The abscissa represents wavelength and the ordinate represents relative energy. As indicated in the graph, the incandescent lamp has a dispersed spectrum over the entire visible light range.

Fig. 11 indicates an example of the spectral distribution (spectrum) of a low-pressure sodium lamp used for example in a tunnel. The abscissa represents wavelength and the ordinate represents relative energy. As illustrated in the graph, the low-pressure sodium lamp has a protruding pulse of energy near 590 nm.

For example, when a scene illuminated by a light source with a very narrow wavelength range such as a low-pressure sodium lamp is captured, the captured image may have a different color tone from the actual visible scene, depending on the spectral sensitivity characteristic of each pixel in the imager.

It is difficult for the conventional imager to reproduce the scene captured with illumination by the light source having the special spectrum.

In contrast, according to the present technology, phenomena that are difficult to reproduce with conventional imager model can be reproduced highly accurately.

### «2. Embodiment»

Now, an embodiment of the present technology will be described with reference to Figs. 12 to 21.

### <Example of Configuration of Automated Driving Simulator 101>

Fig. 12 illustrates an automated driving simulator 101 according to one embodiment to which the present technology is applied.

The automated driving simulator 101 is a system that simulates an automated driving system to realize automated driving, and evaluates and verifies the safety and the like of the automated driving system. The automated driving simulator 101 includes a driving environment-electromagnetic wave propagation-sensor model 111 and an automated driving model 112.

The driving environment-electromagnetic wave propagation-sensor model 111 has a rendering model 121, a perceptual model 122, and a recognition model 123.

The rendering model 121 simulates an environment in which a vehicle travels in a virtual driving test and simulates electromagnetic waves (such as visible light, infrared light, and radio waves) that propagate to the various sensors provided in the vehicle in the simulated environment.

For example, the rendering model 121 simulates an environment in which a vehicle travels on the basis of a 3D model of the vehicle to be subjected to a virtual driving test, characteristics of various objects, and a scenario of the virtual driving test. The characteristics of each object may include a type, a size, a shape, a texture (surface characteristic), and a reflection characteristic. If the object has a light source, the object characteristics include, for example, the frequency and duty ratio at which the light source blinks. The virtual driving test scenario may include a route to be traveled by the vehicle and the conditions in the virtual space around the vehicle on the route. The virtual space conditions may include the position and movement of various objects (including a human), the time of day, weather conditions, and road surface conditions.

The rendering model 121 simulates electromagnetic waves that propagate to various sensors provided in the vehicle from the virtual space around the vehicle in the simulated environment. The electromagnetic waves include reflection waves (such as reflection waves from a millimeter wave radar) virtually emitted to around the vehicle from the perceptual model 122. The rendering model 121 supplies rendering data including data indicating the simulated electromagnetic waves to the perceptual model 122.

The perceptual model 122 simulates the perception step by the automated driving system. For example, the perceptual model 122 simulates the perception processing of perceiving the situation around the vehicle (for example about surrounding objects) by various sensors on the basis of electromagnetic waves simulated by the rendering model 121. The perceptual model 122 generates perception data indicating the results of perceiving the situation around the vehicle and supplies the data to the recognition model 123.

The perceptual model 122, for example includes models corresponding to the sensors provided in the vehicle, each of which perceives an object by electromagnetic waves. For example, the perceptual model 122 includes an imager model 131, a millimeter-wave radar model 132, and a LiDAR (Light Detection and Ranging) model 133.

The imager model 131 simulates an imager (image sensor) provided in the vehicle. For example, the imager model 131 generates a photographed image of a virtual space around the vehicle (hereinafter referred to as a virtual photographed image) on the basis of light (incident light) contained in the electromagnetic waves simulated by the rendering model 121. The imager model 131 is a kind of perceptual data and provides virtual photographed image data corresponding to the virtual photographed image to the recognition model 123.

The millimeter-wave radar model 132 simulates the millimeter-wave radar provided in the vehicle. For example, the millimeter-wave radar model 132 simulates the processing of transmitting millimeter wave signals within a prescribed range around the vehicle, receiving the reflected waves, and generating an IF (intermediate frequency) signal that is a mixture of the transmitted and received waves. The millimeter-wave radar model 132 provides a kind of perceptual data, an IF signal (hereinafter referred to as a virtual IF signal) to the recognition model 123.

The LiDAR model 133 simulates LiDAR provided in the vehicle. The LiDAR model 133 simulates for example the processing of emitting a laser beam within a prescribed range around the vehicle, receiving reflected light thereof, and generating point cloud data on the basis of the reflected light. The LiDAR model 133 provides point cloud data (hereinafter referred to as virtual point cloud data), which is a kind of perceptual data, to the recognition model 123.

The recognition model 123 simulates the recognition step by the automated driving system. For example, the recognition model 123 simulates the processing of recognizing the situation around the vehicle on the basis of virtual image data, a virtual IF signal, and virtual point cloud data. The recognition model 123 recognizes for example the kind, position, size, shape, and motion of an object (including a human) around the vehicle. The recognition model 123 supplies the automated driving model 112 with data indicating a result of recognition (hereinafter referred to as virtual recognition data).

Note that the recognition model 123 may execute recognition processing individually on the basis of perceptual data for each sensor and generate virtual recognition data for the sensor, or may execute fusion of perceptual data among the sensors (sensor fusion) and execute recognition processing on the basis of the fused perceptual data.

The automated driving model 112 simulates determination and operation steps by the automated driving system. For example, the automated driving model 112 simulates the processing of determining the situation around the vehicle and predicting the risks that the vehicle may encounter on the basis of the virtual recognition data. For example, the automated driving model 112 simulates the processing of creating an action plan such as a driving route on the basis of a planned route and the predicted risks. For example, the automated driving model 112 simulates the processing of performing automated operation of the vehicle on the basis of the created action plan.

The automated driving model 112 feeds back information about the virtual situation of the vehicle to the rendering model 121. The virtual situation of the vehicle includes for example the traveling state of the vehicle (e.g., speed, direction, and braking), and the position of the vehicle.

If for example the virtual recognition data supplied by the recognition model 123 is separated by sensor type, the automated driving model 112 performs fusion (sensor fusion) of the recognition results indicated by the respective pieces of virtual recognition data.

### <Exemplary Pixel Arrangement in Imager Model 131>

Fig. 13 illustrates an exemplary pixel arrangement in the imager model 131.

In this example, the pixels in the imager model 131 are arranged according to a Bayer array.

Hereinafter, a unit including four pixels, i.e., 2 rows by 2 columns of a Gr pixel, an R pixel, a B pixel, and a Gb pixel will be referred to as a pixel unit. Therefore, in the imager model 131, the pixels are arranged on a pixel unit basis. The color of a photographed image is expressed on a pixel unit basis.

### <Regarding Imaging Model>

Now, the imaging model for the automated driving simulator 101 will be described.

The imaging model includes all or part of the rendering model 121 shown in Fig. 12 and the imager model 131. The imaging model simulates incident light that enters the imager model 13 and generates virtual image data on the basis of the simulated incident light.

The imaging model can be broadly divided into two types, a gold model and a silver model.

The gold model is used for tests that do not require real-time processing, such as tests for the perception and recognition steps. The gold model is further divided into a gold+ (plus) model, a gold base model, and a gold-(minus) model.

The gold+ model is adapted to simulate the direction of incident light into the imager model 131.

The gold base model is adapted to simulate spectral information about the light incident on the imager model 131 and the exposure period of the imager model 131.

The gold- model is adapted to simulate the exposure period of the imager model 131.

The silver model is used for example when conducting tests that require real-time processing similar to that of a real vehicle, such as tests about determination and operation steps.

Fig. 14 is a table indicating the correspondence between the models of the imaging model and the target real space and automated driving system to be simulated by the automated driving simulator 101. In the drawing, the section labeled "Embeded" indicates the configuration of the real space and the automated driving system. The section labeled "Simulation" shows the configuration of the real-space and automated driving system to which the imaging model corresponds. The first row of the simulation section shows the state of how the silver model responds, the second row shows the state of how the gold- model responds, the third row shows the state of how the gold base model responds, and the fourth row shows the state of how the gold+ model responds.

The silver model addresses the trajectory of an object in the real world and the RGB components and characteristic (Texture) at the surface of the object. In other words, the characteristics of the object are simulated in the silver model.

In the silver model, the light incident on the imager model 131 is represented by R, G, and B components.

The silver model addresses a camera lens in an optical system constituted by the vehicle and the automated driving system. In other words, in the silver model, the effect of the camera lens on the light incident on the imager model 131 is simulated.

The silver model is adapted to the signal processing part of the components of the real imager. In other words, the silver model simulates a part of the signal processing by the imager.

Fig. 15 shows an example of the signal processing of the imager to be simulated in the silver model. For example, the silver model simulates HDR composition processing and RAW processing after the HDR composition as detection processing. Examples of the RAW processing after the HDR composition include white point correction processing and black point correction processing. FW control processing is also simulated.

The gold model is adapted to the trajectory of a real-world object, the RGB components and surface characteristics of the object, and the blink frequency and duty ratio of the light source. In other words, the characteristics of the above object and light source are simulated in the gold model.

In the gold- model, the light incident on the imager model 131 is represented by R, G, and B components. In the gold model, the exposure characteristics of the imager are simulated for the light incident on the imager model 131.

The gold model addresses the camera lens in the optical system constituted by the vehicle and the automated driving system. In other words, the effect of the camera lens on the light incident on the imager model 131 is simulated in the gold model.

The gold model addresses signal processing among the elements of a real imager. In other words, the gold- model simulates at least a part of the signal processing by the imager.

Note that the gold- model simulates more signal processing than the silver model.

Fig. 16 illustrates an example of signal processing by the imager to be simulated in the gold- model. For example, the gold- model simulates the sub-pixel structure processing described with reference to Fig. 3 and spectral quantum efficiency processing. For example, the spectral quantum efficiency processing and AD (Analog/Digital) conversion processing are simulated. The processing by the rolling shutter may be simulated. As an example of detection processing, RAW processing before HDR composition processing, the HDR composition processing, and RAW processing after the HDR composition processing are simulated. An example of the RAW processing after the HDR composition processing includes noise reduction. For example, PWL (tone mapping) processing and FW processing are simulated.

The gold base model addresses the trajectory of an object in the real world, the surface characteristic of the object, and the spectral characteristic of the light source, the blinking frequency, and the duty ratio. More specifically, in the gold-model, the characteristics of the object and the light source are simulated.

In the gold base model, incident light on the imager model 131 is represented by the spectral characteristic. In the gold base model, the exposure characteristic of the imager is simulated with respect to light incident on the imager model 131.

The gold base model addresses a camera lens in the optical systems constituted by the vehicle and the automated driving system. More specifically, in the gold base model, the characteristic of the camera lens is simulated with respect to light incident on the imager model 131.

The gold base model addresses a CFA (Color Filter Array among the elements of the real imager and signal processing. More specifically, in the gold base model, the characteristic of the CFA and the same signal processing as the gold- model are simulated with respect to light incident on the imager model 131.

The gold+ model addresses the trajectory of the object in the real world, the surface characteristic of the object, and the spectral characteristic of the light source. More specifically, in the gold- model, the characteristics of the object and the light source are simulated.

In the gold+ model, incident light on the imager model 131 is represented by the spectral characteristic.

The gold+ model addresses windshields, headlights, a camera module, and a camera lens in an optical system constituted by the vehicle and the automated driving system. More specifically, in the gold+ model, the characteristics of the windshields, the headlights, the camera module, and the camera lens are simulated with respect to the light incident on the imager model 131.

The gold+ model addresses a package, an OCL (On Chip Lens), and a CFA among the elements of the real imager and the signal processing. More specifically, in the gold model, the characteristics of the package, the OCL, and the CFA are simulated and the same signal processing as the signal processing by the gold-model and the gold base model are simulated, with respect to incident light on the imager model 131.

### <Kinds Of Output/Input Data from/to Imager Model 131>

Fig. 17 indicates examples of kinds of input data (rendering data) to the imager model 131 and examples of kinds of output data (virtual photographed image data) from the imager model 131 in the models of imaging models.

In the gold+ model, the input data includes spectral information and incident direction information. More specifically, the input data includes spectral information about a prescribed plurality of incident directions of light incident on the pixels in the imager model 131. The output data includes virtual photographed image data corresponding to a high fidelity image. The high fidelity image is for example an HD (High Definition), 4K or 8K image.

In the gold base model, the input data includes spectral information and exposure information. More specifically, the input data includes spectral information about light incident on the pixels in the imager model 131 during an exposure period. The output data includes virtual photographed image data corresponding to the high fidelity image.

In the gold- model, the input data includes RGB information and exposure information. More specifically, the input data includes information about R, G, and B components (RGB information) about light incident on the pixels in the imager model 131 during an exposure period. The output data includes virtual photographed image data corresponding to a high fidelity image.

Note that the format of the virtual photographed image data is not limited. For example, data in an RAW format or a YUV format may be used.

In the silver model, the input data includes RGB information about light incident on the pixels in the imager model 131. The RGB information about the incident light is input at a frame rate of 30 fps (frame per second). The exposure characteristics of the pixels are not reflected on the RGB information about the light incident on the pixels. The input data includes I2C data, embedded data, FuSa (Function Safety) data, and cyber-security data. The output data includes a standard fidelity image, I2C data, embedded data, FuSa data, and cyber security data. The standard fidelity image is for example an SD (Standard Definition) image.

Note that in the gold+ model, the input data may include exposure information. More specifically, the image data may include spectral information about each of prescribed multiple incident directions (Multi Direction) of incident light on the pixels in the imager model 131 during the exposure period.

In the gold+ model, the gold base model, and the gold- model, the input data and the output data may include for example I2C data, embedded data, FuSa data, and cyber security data.

### <Rendering Model-Imager Model Data Structure>

Now, an example of the structure of data input/output between the rendering model 121 and the imager model 131 will be described.

### <Exemplary Structure of Data related to Intensity of Incident Light>

With reference to Fig. 18, an example of the structure of data related to the intensity of light incident on pixels in the imager model 131 from the rendering model 121 will be described.

WellInPix is a constant that represents the number of pixels included in a pixel unit to be used for reproducing the color of a photographed image. As described above, the pixels in the imager model 131 are arranged in a Bayer array and each unit includes four pixels, so that WellInPix is set to four.

Spectral0 is a constant that represents a minimum value for wavelength in spectral information. In this example, the Spectral0 is set to 400 nm.

SpectralI is a constant that represents a bandwidth in the spectral information. In this example, SpectralI is set to 5 nm.

SpectralN is a constant that represents a band number in the spectral information. In this example, SpectralN is set to 60.

Therefore, a maximum value for wavelength in the spectral information is 700 nm (=400 nm + 5 nm × 60). The spectral information indicates the intensity of incident light with a total of 60 bands for each 5 nm in bandwidth in the wavelength range from 400 nm to 700 nm.

Each of PhotonFlux, RGBLuminance, and RGBIrradiance is a structure that indicates the intensity of light incident on the pixels in a single pixel unit.

PhotonFlux is a structure that indicates the intensity of light incident on the pixels that constitutes a pixel unit as a photon flux density (unit: µmol/m²·s). PhotonFlux includes SP[WellInPix], which is a uint type, one-dimensional array type variable. For example, SP[1] indicates the photon flux density of light incident on Gr pixels, SP[2] indicates the photon flux density of light incident on R pixels, SP[3] indicates the photon flux density of light incident on B pixels, and SP[4] indicates the photon flux density of light incident on Gb pixels.

RGBLuminance is a structure that represents the intensity of incident light on each of pixels constituting a pixel unit in terms of luminance (unit: cd/m²). RGBLuminance contains SP[WellInPix], which is a float type, one-dimensional array type variable. For example, SP[1] represents the luminance of light incident on Gr pixels, SP[2] represents the luminance of light incident on R pixels, SP[3] represents the luminance of light incident on B pixels, and SP[4] represents the luminance of light incident on Gb pixels.

RGBIrradiance is a structure that represents the intensity of incident light on each of the pixels constituting a pixel unit in terms of irradiance (unit: W/m²). RGBIrradiance includes SP[WellInPix], which is a float type, one-dimensional array type variable. For example, SP[1] represents the radiance of light incident on Gr pixels, SP[2] represents the radiance of light incident on R pixels, SP[3] represents the radiance of light incident on B pixels, and SP[4] represents the radiance of light incident on Gb pixels.

For example, in the gold base model, gold- model, and silver model, the intensity of light incident on the pixels in the imager model 131 is represented using one of the following structures: PhotonFlux, RGBLuminance, and RGBIrradiance. PhotonFlux, RGBLuminance, and RGBIrradiance can be converted between each other. Therefore, for example, the three structures can be used differently if necessary, or the intensities of incident light represented by different structures can be unified so that they can be represented by the same structure.

SpectralRadiance is a structure that represents spectral information about incident light on the pixels that constitute a pixel unit. SpectralRadiance includes SP[WellInPix] and [SpectralN], which are float type, two-dimensional array type variables. SP[i][j] indicates the spectral radiance intensity of the j-th band of incident light on the i-th pixel of the pixel unit. For example, SP[1][1] indicates the spectral radiance intensity of the incident light on the Gr pixels in the band from 400 nm to 405 nm, SP[1][2] indicates the spectral radiance intensity of the incident light on the Gr pixels in the band from 405 nm to 410 nm, and SP[1][60] indicates the spectral radiance intensity of the incident light on the Gr pixels in the band from 695 nm to 700 nm.

For example, in the gold+ model, SpectralRadiance is used to represent spectral information about light incident on the pixels in the imager model 131.

Note that the wavelength range, band range, and number of bands in the spectral information can be changed. For example, the minimum wavelength in the spectrum information can be set to 400 nm, the bandwidth to 30 nm, and the number of bands to 10.

Note however that as the bandwidth decreases, the simulation becomes closer to the real world. For example, in order to reproduce a scene illuminated by a light source having a spectrum in a very narrow wavelength band such as the low pressure sodium lamp described with reference to Fig. 11, light having the wave length of the light source may be selectively extracted in one band width, and simulation may be executed while reducing the effect of light with other wavelengths. In such a case, the bandwidth is desirably set to, for example, 5 nm or less. For example, it is desirable to set the bandwidth to satisfy 0 nm < bandwidth ≤ 5 nm.

Meanwhile, as the bandwidth decreases, the number of bands increases and the processing time for the simulation increases.

In contrast, for example, the bandwidth may be made variable between different wavelength ranges. For example, the bandwidth may be set narrower near wavelengths corresponding to special light and wider in other wavelength ranges. For example, the bandwidth may be set to 5 nm in the wavelength range around 590 nm for a low pressure sodium lamp, and the bandwidth may be set to 30 nm in other wavelength ranges. In this way, simulations closer to the real world can be performed in the special light wavelength range while reducing the simulation processing time in the other wavelength ranges.

The bandwidth may be changed during execution of simulation. For example, the bandwidth may be changed arbitrarily depending on the purpose of simulation. For example, when running a simulation that is close to the real world, the bandwidth may be set to 5 nm, and when the processing time is to be shortened, the bandwidth may be set to 30 nm.

For example, the wavelength range in the spectral information may include near infrared and infrared light ranges.

The number of bands in the spectral information is desirably greater than the number of bands in the imager model 131 (the imager to be simulated). For example, in this example, the number of bands in the imager model 13 is three (R, G, and B). Therefore, the number of bands in the spectral information is desirably set to four or more bands.

### <Exemplary Structure of Data related to Incident Direction of Incident Light>

Now, with reference to Fig. 19, an exemplary structure of data related to the incident direction of light incident on the pixels in the imager model 131 from the rendering model 121 will be described.

Direction is a structure that represents the direction of light incident on the pixels in the imager model 131. Direction includes Dir[dx][dy], which is a two-dimensional array type variable. Dir[dx][dy] indicates the incident direction of incident light.

The characters dx and dy indicate the incident direction of the angle of incidence when the central axis of the substrate of the imager is used as a reference direction. The central axis of the substrate is for example an axis passing through the center of the substrate and perpendicular to the substrate. The angle of incidence in a direction inclined to the left or right with respect to the reference direction is denoted by dx. When the angle of incidence is inclined to the right, dx takes a positive value, and when the angle of incidence is inclined to the left, dx takes a negative value. The angle of incidence in the direction inclined upward or downward with respect to the reference direction is denoted by dy. When the angle of incidence is inclined upward, dy takes a positive value, and when the angle of incidence is inclined downward, dy takes a negative value.

For example, Dir[0][0] represents light from directly above (In the vertical direction), and Dir[10][50] represents light from 10 degrees to the right and 50 degrees above.

For example, in the gold+ model, Direction is used to represent the incident direction of light incident on the pixels in the imager model 131. For example, by combining Direction with SpectralRadiance as described above with reference to Fig. 18, spectral information about incident light on the pixels in the imager model 131 for each direction of incident light is represented.

Note that in the gold+ model, in the imager model 131, data about incident light represented by SpectralRadiance and Direction is converted into data represented by PhotonFlux, RGBLuminance or RGBIrradiance for example on the basis of the wavelength characteristic of the CFA.

Note that Direction may be combined with PhotonFlux, RGBLuminance, or RGBIrradiance described with reference to Fig. 18.

### <Exemplary Structure of Data related to Exposure Characteristic>

Now, with reference to Fig. 20, an exemplary structure of data related to the exposure characteristic of each of the pixels in the imager model 131.

Exposure is a structure that represents the exposure characteristic of the imager model 131. Exposure includes uint type variables x0, y0, xw, and yw, and float type variables exposure0 and exposureN.

In the drawing, x0 indicates the starting column of the range of pixels for which an exposure period is set.

Then, y0 indicates the starting row of the range of pixels for which the exposure period is to be set.

Further, xw indicates the number of pixels in the horizontal direction (widthwise direction) of the range of pixels for which the exposure period is to be set.

Then, yw indicates the number of pixels in the vertical direction (height-wise direction) of the range of pixels for which the exposure period is to be set.

Then, exposure0 indicates the starting time of the exposure period.

Further, exposureN indicates the length of the exposure period.

Thus, Exposure indicates that the pixels within a rectangle with a width xw and a height yw, starting at the coordinates (x0, y0) of the pixel array of the imager model 131 (the pixel in the upper left corner of the pixel range), are exposed for the period of the length exposureN from the starting time exposure0.

For example, when the imager model 131 is a global shutter type, the coordinates (x0, y0) are set to (0, 0), the width xw is set to the number of pixels in the horizontal direction in the pixel arrays in the imager model 131, the height yw is set to the number of the pixels in the vertical direction in the pixel arrays in the imager model 131. In this way, the exposure period for all the pixels in the imager model 131 are set to the same period.

For example, when the imager model 131 is a rolling shutter type, the coordinates (x0, y0) are set to (0, yi), the width xw is set to the number of pixels in the horizontal direction in the pixel arrays of the imager model 131, and the height yw is set to 1. In this way, the exposure period for the pixels in the row yi of the imager model 131 is set. Note that when exposure is performed in on an n row basis (n being at least 2), the height yw is set to n.

For example, the imager model 131 uses Exposure to inform the rendering model 121 of information about the exposure period of each pixel. The rendering model 121 simulates the incident light on each pixel during the informed exposure period.

### <Exemplary Structure of Buffer between Rendering Model and Imager Model>

Now, with reference to Fig. 21, an example of the structure of data in the buffer provided between the rendering model 121 and the imager model 131 will be described.

Buffer 1 is a structure provided between the rendering model 121 and the imager model 131 to store data about incident light on the pixels in the imager model 131. Buffer 1 includes Exposure as the structure described with reference to Fig. 20 and pointer variables *Pix[ROI.xw] and [ROI.yw].

Exposure sets an exposure period and an exposure range for which data about incident light is stored in the buffer. More specifically, data about incident light on the pixels in the exposure range and during the exposure period set by Exposure is stored in the buffer.

Specifically, the period having the length Exposure.exposureN from the starting time Exposure.exposure0 is set as the exposure period for which incident light data is to be stored in the buffer. The range of a rectangle having the width Exposure.xw and the height Exposure.yw starting from the coordinates (Exposure.x0, Exposure.y0) is set as the exposure range for which incident light data is to be stored in the buffer.

*Pix[ROI.xw][ROI.yw] is a two-dimensional array-type pointer variable that stores data indicating the intensity of incident light on the pixels (PhotonFlux, RGBLuminance, RGBIrradiance or SpectralRadiance).

For example, data indicating the intensity of light incident on the pixels in the rectangular exposure range with the width Exposure.xw and the height Exposure.yw starting from the coordinates (Exposure.x0, Exposure.y0) during the exposure period having the length Exposure.exposureN from the starting time Exposure.exposure0 is stored in two dimensional array type variables from Pix[Exposure.x0][Exposure.y0] to Pix[Exposure.x0+xw][Exposure.x0+yw].

As in the foregoing, the spectral information about the incident light on pixels in the imager, the direction of the incident light, and the exposure period can be simulated on a pixel basis. The optical system constituted by the vehicle and the automated driving system, the optical system of the imager, and the signal processing can also be simulated on a pixel basis.

In this way, in the virtual photographed image output from imager model 131, motion blur, white clipping, black clipping, HDR composition processing, flares, ghosts, rolling shutter distortion, flickers, and a light source having a special spectrum can be simulated.

### «3. Modifications»

Hereinafter, modifications of the foregoing embodiment of the present technology will be described.

### <Modifications related to Automated Driving Simulator>

Fig. 22 illustrates an exemplary configuration of an automated driving simulator 301 as a first modification of the automated driving simulator 101 in Fig. 12. In the drawing, the same reference numerals denote the elements corresponding to those of the automated driving simulator 101, and their descriptions will be omitted as appropriate.

The automated driving simulator 301 is different from the automated driving simulator 101 in that the former has a driving environment-electromagnetic wave propagation-sensor model 311 instead of the driving environment-electromagnetic wave propagation-sensor model 111. Unlike the driving environment-electromagnetic wave propagation-sensor model 111, the driving environment-electromagnetic wave propagation-sensor model 311 includes a rendering model 321 and an optical model 322 instead of the rendering model 121. In other words, in the automated driving simulator 301, the rendering model 121 of the automated driving simulator 101 is divided into the rendering model 321 and the optical model 322.

The rendering model 321 simulates electromagnetic waves that propagate to various senses provided in the vehicle from the virtual space around the vehicle without taking into consideration of the effects of the optical system constituted by the vehicle and the automated driving system. The rendering model 321 supplies the optical model 322 with rendering data including data that indicates the simulated electromagnetic waves.

The optical model 322 simulates the optical system constituted by the vehicle and the automated driving system. The optical model 322 simulates effects brought about by the optical system upon the rendering data. The optical model 322 supplies the perceptual model 122 with the rendering data.

Note that the rendering model 321, the optical model 322, and the perceptual model 122 exchange necessary data with each other.

Fig. 23 illustrates an exemplary configuration of the automated driving simulator 301 as a second modification of the automated driving simulator 101 shown in Fig. 12. In the drawing, the same reference numerals denote the elements corresponding to those of the automated driving simulator 101 in Fig. 12, and their descriptions will be omitted as appropriate.

Unlike the automated driving simulator 101, the automated driving simulator 351 includes a driving environment-electromagnetic wave propagation-sensor model 361 instead of the driving environment-electromagnetic wave propagation-sensor model 111. Unlike the driving environment-electromagnetic wave propagation-sensor model 111, the driving environment-electromagnetic wave propagation-sensor model 361 includes a perceptual model 371 instead of the perceptual model 122 and the recognition model 123. More specifically, in the automated driving simulator 301, The perceptual model 122 and the recognition model 123 are integrated into the perceptual model 371.

The perceptual model 371 executes processing obtained by integrating processing carried out by the perceptual model 122 and the recognition model 123. Note that the perceptual model 371 may include a model for each sensor similarly to the perceptual model 122.

### <Other Modifications>

For example, the exposure period may be simulated by the imager model 131. For example, time series data representing incident light on the pixels in the imager model 131 maybe input to the imager model 131 from the rendering model 121, so that the imager model 131 may select or discard the time series data about the incident light on the basis of the exposure period for the pixels.

The imaging model (the rendering model 121 and the imager model 131) may switch the model among the gold+ model, the gold base model, the gold- model, and the silver model on the basis of a scene to be simulated. More specifically, the rendering model 121 selects a target to be rendered on the basis of a scene to be simulated and changes the data structure of the rendering data to be generated, and the imager model 131 selects a function and a characteristic for the imager to be simulated.

For example, when a scene that requires real-time processing is to be simulated, the silver model is selected. For example, when a scene with rolling shutter distortion is to be simulated, the gold base model or the gold- model is selected. For example, when a scene under a special light source is simulated, the gold base model is selected. For example, when a scene in which a flare or ghost occurs is simulated, the gold+ model is selected.

The foregoing description relates to the data structure of incident light on the imager model 131, the electromagnetic waves that propagate to other models than the perceptual model 122 can be represented by the same data structure. For example, the intensity of electromagnetic waves or spectral information thereabout can be represented by PhotonFlux, RGBLuminance, RGBIrradianc, and SpectralRadiance shown in Fig. 18. For example, Direction in Fig. 19 can represent the direction in which electromagnetic waves propagate. For example, a combination of SpectralRadiance and Direction can represent the intensity or spectral information for each propagation direction of electromagnetic waves. The pieces of electromagnetic wave data are included for example in the rendering data output from the rendering model 121.

The above description is about an example of how the technology is applied to an automated driving simulator that simulates a vehicle automated driving system, but the present technology can also be applied to simulators that perform other types of simulation.

For example, the present technology can be applied to simulators for automated driving systems for various moving devices other than the vehicles. Examples of moving devices to which the technology is applicable include a train, a ship, an aircraft, a drone, a motorcycle, a personal mobility vehicle, a robot, a construction machine, and an agricultural machine (such as a tractor).

For example, the present technology can be applied to simulators for driving systems other than automated driving for moving devices.

For example, the present technology may be applied to a simulator for a system that executes a perception step and a recognition step other than the moving devices.

### «4. Others»

### <Exemplary Computer Configuration>

The series of processing steps described above can be executed by hardware or software. When the series of processing steps is performed by software, a program of the software is installed in a computer. Here, the computer includes a computer embedded in dedicated hardware or, for example, a general-purpose personal computer capable of executing various functions by installing various programs.

Fig. 24 is a block diagram illustrating an example of the hardware configuration of a computer that executes the series of processing steps described above according to a program.

In a computer 1000, a CPU (Central Processing Unit) 1001, a ROM (Read Only Memory) 1002, and a RAM (Random Access Memory) 1003 are connected to each other by a bus 1004.

An input/output interface 1005 is further connected to the bus 1004. An input unit 1006, an output unit 1007, a storage unit 1008, a communication unit 1009, and a drive 1010 are connected to the input/output interface 1005.

The input unit 1006 includes for example an input switch, a button, a microphone, an imaging element. The output unit 1007 includes for example a display and a speaker. The storage unit 1008 includes for example a hard disk and a non-volatile memory. The communication unit 1009 may be a network interface. The drive 1010 drives a removable medium 1011 such as a magnetic disk, an optical disk, a magneto-optical disk, or a semiconductor memory.

In the computer 1000 configured as described above, for example, the CPU 1001 loads a program recorded in the storage unit 1008 into the RAM 1003 via the input/output interface 1005 and the bus 1004 and executes the program to perform the series of processing steps described above.

The program executed by the computer 1000 (CPU 1001) may be recorded on, for example, the removable medium 1011 for example as a package medium so as to be provided. The program can also be provided via a wired or wireless transmission medium such as a local area network, the Internet, or digital satellite broadcasting.

In the computer 1000, the program may be installed in the storage unit 1008 via the input/output interface 1005 by inserting the removable medium 1011 into the drive 1010. Further, the program can be received by the communication unit 1009 via the wired or wireless transmission medium and installed in the storage unit 1008. Alternatively, the program can be installed in the ROM 1002 or the storage unit 1008 in advance.

Note that the program executed by a computer may be a program that performs processing in time series in the order described in the present specification or may be a program that performs processing in parallel or at a necessary timing such as a called time.

In the present specification, a system means a set of a plurality of constituent elements (devices, modules (components), or the like) and all the constituent elements may or may not be included in a same casing. Accordingly, a plurality of devices accommodated in separate casings and connected via a network and one device in which a plurality of modules are accommodated in one casing both constitute systems.

Further, embodiments of the present technology are not limited to the above-mentioned embodiment and various modifications may be made without departing from the gist of the present technique.

For example, the present technology may be configured as cloud computing in which a plurality of devices share and cooperatively process one function via a network.

In addition, each step described with reference to the above flowchart can be executed by one device or executed in a shared manner by a plurality of devices.

Furthermore, in a case in which one step includes a plurality of kinds of processing, the plurality of kinds processing included in the one step can be executed by one device or executed in a shared manner by a plurality of devices.

### <Combination Example of Configuration>

The present technology can also have the following configurations.
(1) An information processing device including a perceptual model configured to simulate a sensor that perceives an object by electromagnetic waves and generate output data that represents a result of perceiving the object on the basis of input data including at least one of a propagation direction of the electromagnetic waves and spectral information about the electromagnetic waves.
(2) The information processing device according to (1), wherein
   the perceptual model includes an imager model configured to simulate an imager, the input data includes incident light data that includes at least one of an incident direction of an incident light and spectral information about the incident light for each pixel, and
   the imager model generates image data on the basis of the incident light data.
(3) The information processing device according to (2), wherein the incident light data includes at least one of the incident direction of the light incident on each pixel and spectral information about the incident light during an exposure period.
(4) The information processing device according to (3), wherein the imager model notifies a rendering model that generates the input data of information related to the exposure period for each pixel.
(5) The information processing device according to (3) or (4), wherein the imager model simulates a rolling shutter type imager.
(6) The information processing device according to any one of (2) to (5), wherein the incident light data includes intensity of the light incident on each pixel for each incident direction.
(7) The information processing device according to (6), wherein the incident light data includes spectral information about the incident light on each pixel for each incident direction.
(8) The information processing device according to any one of (2) to (7), wherein the spectral information has a greater number of bands than the number of bands in the imager model.
(9) The information processing device according to any one of (2) to (8), wherein the spectral information has a band width which is greater than 0 nm and not more than 5 nm.
(10) The information processing device according to any one of (2) to (9), wherein the imager model selects a function and a characteristic for the imager to be simulated on the basis of a scene to be simulated.
(11) The information processing device according to (10), further including a rendering model configured to simulate incident light that enters the imager from a surrounding space,
   wherein
   the rendering model changes the data structure of the incident light on the basis of the scene to be simulated.
(12) The information processing device according to any one of (1) to (11), wherein the input data includes intensity of the electromagnetic waves for each propagation direction.
(13) The information processing device according to (12), wherein the input data includes spectral information about the electromagnetic waves for each propagation direction.
(14) The information processing device according to any one of (1) to (13), further including a rendering model configured to simulate electromagnetic waves that propagate from a surrounding space to the sensor.
(15) The information processing device according to any one of (1) to (14), wherein the perceptual model simulates the sensor provided in a vehicle.
(16) An information processing method including simulating a sensor configured to perceive an object by electromagnetic waves and generating output data representing a result of perceiving the object on the basis of input data including at least one of a propagation direction of electromagnetic waves and spectral information about the electromagnetic waves.
(17) A program for causing a computer to perform processing including simulating a sensor configured to perceive an object by electromagnetic waves and generating output data representing a result of perceiving the object on the basis of input data including at least one of a propagation direction of the electromagnetic waves and spectral information about the electromagnetic waves.

The advantageous effects described herein are merely exemplary and are not limited, and other advantageous effects may be obtained.

### [Reference Signs List]

- 101: Automated driving simulator
- 111: Driving environment-electromagnetic wave propagation-sensor model
- 112: Automated driving model
- 121: Rendering model
- 122: Perceptual model
- 123: Recognition model
- 131: Imager model
- 132: Millimeter wave radar model
- 133: LiDAR model
- 301: Automated driving simulator
- 311: Driving environment-electromagnetic wave propagation-sensor model
- 321: Rendering model
- 322: Optical model
- 351: Automated driving simulator
- 361: Driving environment-electromagnetic wave propagation-sensor model
- 371: Perceptual model

## Claims

1. An information processing device comprising a perceptual model configured to simulate a sensor that perceives an object by electromagnetic waves and generate output data that represents a result of perceiving the object on the basis of input data including at least one of a propagation direction of the electromagnetic waves and spectral information about the electromagnetic waves.

2. The information processing device according to claim 1, wherein
the perceptual model includes an imager model configured to simulate an imager,
the input data includes incident light data that includes at least one of an incident direction of an incident light and spectral information about the incident light for each pixel, and
the imager model generates image data on the basis of the incident light data.

3. The information processing device according to claim 2, wherein the incident light data includes at least one of the incident direction of the light incident on each pixel and the spectral information about the incident light during an exposure period.

4. The information processing device according to claim 3, wherein the imager model notifies a rendering model that generates the input data of information related to the exposure period for each pixel.

5. The information processing device according to claim 3, wherein the imager model simulates a rolling shutter type imager.

6. The information processing device according to claim 2, wherein the incident light data includes intensity of the light incident on each pixel for each incident direction.

7. The information processing device according to claim 6, wherein the incident light data includes spectral information about the incident light on each pixel for each incident direction.

8. The information processing device according to claim 2, wherein the spectral information has a greater number of bands than the number of bands in the imager model.

9. The information processing device according to claim 2, wherein the spectral information has a band width which is greater than 0 nm and not more than 5 nm.

10. The information processing device according to claim 2, wherein the imager model selects a function and a characteristic for the imager to be simulated on the basis of a scene to be simulated.

11. The information processing device according to claim 10, further comprising a rendering model configured to simulate incident light that enters the imager from a surrounding space,
wherein the rendering model changes the data structure of the incident light on the basis of the scene to be simulated.

12. The information processing device according to claim 1, wherein the input data includes intensity of the electromagnetic waves for each propagation direction.

13. The information processing device according to claim 12, wherein the input data includes spectral information about the electromagnetic waves for each propagation direction.

14. The information processing device according to claim 1, further comprising a rendering model configured to simulate electromagnetic waves that propagate from a surrounding space to the sensor.

15. The information processing device according to claim 1, wherein the perceptual model simulates the sensor provided in a vehicle.

16. An information processing method comprising simulating a sensor configured to perceive an object by electromagnetic waves and generating output data representing a result of perceiving the object on the basis of input data including at least one of a propagation direction of electromagnetic waves and spectral information about the electromagnetic waves.

17. A program for causing a computer to perform processing comprising simulating a sensor configured to perceive an object by electromagnetic waves and generating output data representing a result of perceiving the object on the basis of input data including at least one of a propagation direction of the electromagnetic waves and spectral information about the electromagnetic waves.
